(19) **Europäisches Patentamt / European Patent Office / Office européen des brevets**

(11) **EP 4 148 657 B1**

(12) **FASCICULE DE BREVET EUROPEEN**

(45) Date de publication et mention
de la délivrance du brevet:
**11.03.2026 Bulletin 2026/11**

(21) Numéro de dépôt: **22191178.7**

(22) Date de dépôt: **19.08.2022**

(51) Classification Internationale des Brevets (IPC):
**G06T 3/047** *(2024.01)* **G06T 3/18** *(2024.01)*

(52) Classification Coopérative des Brevets (CPC):
**G06T 3/18; G06T 3/047;** G06T 2207/10004;
G06T 2207/30252

(54) **PROCÉDÉ DE GÉNÉRATION D'UNE IMAGE FINALE DE L'ENVIRONNEMENT D'UN VÉHICULE AUTOMOBILE**

VERFAHREN ZUR ERZEUGUNG EINES ENDGÜLTIGEN BILDES DER UMGEBUNG EINES KRAFTFAHRZEUGS

METHOD FOR GENERATING A FINAL IMAGE OF THE ENVIRONMENT OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2021 FR 2109528**

(43) Date de publication de la demande:
**15.03.2023 Bulletin 2023/11**

(73) Titulaire: **Ampere SAS**
**92100 Boulogne-Billancourt (FR)**

(72) Inventeur: **Ambroise, Stéphanie**
**78288 Guyancourt (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
FR-A1- 3 088 754    FR-A1- 3 100 914
KR-A- 20090 012 290    KR-B1- 101 916 419
US-A1- 2020 273 205

- **YEN-TING YEH: "Driver Assistance System Providing an Intuitive Perspective View of Vehicle Surrounding", COMPUTER VISION - ACCV 2014 WORKSHOPS, 1 January 2015 (2015-01-01), Cham, XP055473080, ISBN: 978-3-319-16631-5, Retrieved from the Internet <URL:http://imlab.tw/wp-content/uploads/2015/11/Driver-Assistance-System-Providing-an-Intuitive-Perspective-View-of-Vehicle-Surrounding.pdf> [retrieved on 20180507]**

## Description

### Domaine technique de l'invention

La présente invention concerne de manière générale le domaine du traitement d'images.

Elle concerne plus particulièrement un procédé de génération d'une image finale de l'environnement d'un véhicule automobile.

L'invention trouve une application particulièrement avantageuse dans la conception des véhicules automobiles et dans le calibrage de capteurs d'images équipant les véhicules automobiles.

### Etat de la technique

Il est connu d'équiper un véhicule automobile d'une ou plusieurs caméras à grand angle, dont les objectifs sont qualifiés de « fish-eye ». Ces caméras permettent de capturer des images de l'environnement avec un très grand champ de vision.

Lors de la conception d'un véhicule automobile équipé d'une caméra grand angle, la validation de certains développements nécessite l'utilisation d'images acquises en conditions réelles de déplacement du véhicule automobile. Cela est par exemple le cas lors du paramétrage de caméras présentes dans l'habitacle pour la surveillance du conducteur et/ou des occupants du véhicule automobile ou du processus de détection d'obstacles dans l'environnement de ce véhicule. Par conséquent, il est d'usage de faire rouler un véhicule d'essai équipé de caméras grand angle sur la route, afin de valider par exemple la position de ces caméras.

Cependant, il est fréquent que les positions des caméras soient ensuite modifiées lors de ces phases de développement. Ces modifications de positions des caméras impliquent alors de devoir faire à nouveau rouler le véhicule d'essai pour acquérir de nouvelles images en conditions réelles de déplacement du véhicule. Le processus de conception des véhicules est alors allongé et plus coûteux. 1

Le brevet KR101916419 B1 (EYENIX CO LTD [KR]) 30 janvier 2019, divulgue une méthode pour générer des images multi-vues à partir d'une caméra grand angle. En particulier, chaque image correspond à un point de vue différent d'une caméra virtuelle positionnée comme la caméra grand angle, mais orientée différemment et avec un champ de vision plus restreint.

Le brevet KR 2009 0012290 A (NANO PHOTONICS CO LTD [KR]) 3 février 2009, divulgue un procédé de traitement d'images mathématiquement précis capable d'extraire une image panoramique à partir de l'image obtenue par un appareil photo équipé d'un objectif grand angle présentant une symétrie de rotation autour d'un axe optique.

Le brevet FR 3 100 914 A1 (RENAULT SAS [FR]) 19 mars 2021, divulgue un procédé d'élaboration d'une image globale représentant une vue grand angle de type fisheye de l'environnement d'un véhicule automobile. Ce procédé comprend une première étape d'acquisition d'au moins trois images élémentaires de type non distordu d'une même scène de l'environnement vue sous des angles et/ou depuis des positions différentes, et une seconde étape étape d'élaboration de ladite image globale en combinant lesdites au moins trois images élémentaires.

### Présentation de l'invention

La présente invention propose alors de modifier les images acquises lorsqu'une caméra a été déplacée lors de la conception du véhicule alors que des images avaient été acquises par cette caméra lors d'un roulage d'essai, sans effectuer un nouveau roulage.

Plus particulièrement, on propose selon l'invention un procédé de génération d'une image finale de l'environnement d'un véhicule automobile selon la revendication 1.

Ainsi, grâce à l'invention, l'image finale, correspondant à celle qui serait acquise par la caméra déplacée, est directement générée à partir d'une image initiale acquise, sans pour autant devoir effectuer un nouveau roulage d'essai. La transformation subie par la caméra lors de son déplacement est directement appliquée à des images issues de l'image initiale acquise, sans perte d'information ni de qualité.

D'autres caractéristiques avantageuses et non limitatives du procédé de génération d'une image finale de l'environnement d'un véhicule automobile conforme à l'invention, prises individuellement ou selon toutes les combinaisons techniquement possibles, sont les suivantes :

- l'étape de génération desdites images élémentaires initiales comprend des sous-étapes de :

  a) mémorisation d'une carte prédéterminée de distorsion associant à des valeurs prédéterminées d'un angle d'incidence d'un rayon arrivant sur le capteur d'image des valeurs correspondantes d'un coefficient de correction de la distorsion, et

b) détermination de la correction de distorsion, pour chaque pixel d'une image élémentaire initiale, sur la base de ladite carte prédéterminée de distorsion ;

- le coefficient de correction de la distorsion est de la forme d'un polynôme de degré au moins égal à 6 ;
- ladite transformation de changement de repère prend en compte un changement d'axe et/ou un changement de centre dudit capteur d'image ;
- il est également prévu une étape d'amélioration de l'image finale en réduisant une partie périphérique de ladite image finale ;
- il est également prévu, lorsque le centre de la posture actualisée dudit capteur d'image est éloigné du centre de la posture initiale dudit capteur d'image et lorsque des objets présents dans l'environnement du véhicule automobile sont situés à proximité dudit véhicule, une étape de détermination, sur la base de données acquises par un système de télédétection par lumière équipant ledit véhicule automobile, des coordonnées de points d'un nuage de points caractérisant les formes et positions des objets présents dans l'environnement du véhicule automobile, dans le champ dudit système de télédétection par lumière, les images élémentaires actualisées étant déterminées en fonction desdites coordonnées des points du nuage de points ;
- il est également prévu des étapes de :

c1) identification de chaque point dudit nuage de points déterminé par rapport aux objets présents dans l'environnement du véhicule automobile par association de chacun des points dudit nuage de points déterminé à un pixel correspondant de l'une des images élémentaires initiales,
c2) détermination d'une caractéristique de texture de chaque point identifié du nuage de points sur la base d'une caractéristique de texture du pixel correspondant de l'une des images élémentaires initiales,
c3) reconstitution des images élémentaires actualisées à partir de chaque point du nuage de points affecté de la caractéristique de texture correspondante par association dudit point à un pixel correspondant de l'une des images élémentaires actualisées ; et

- les images élémentaires initiales sont générées virtuellement dans un environnement virtuel dans lequel le véhicule automobile est modélisé.

L'invention concerne également un véhicule automobile comprenant un capteur d'image d'un capteur d'image muni d'un objectif à grand angle et un calculateur configuré pour mettre en œuvre le procédé introduit précédemment.
Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

## Description détaillée de l'invention

La description qui va suivre en regard des dessins annexés, donnés à titre d'exemples non limitatifs, fera bien comprendre en quoi consiste l'invention et comment elle peut être réalisée.
Sur les dessins annexés :

[Fig.1] est une vue schématique en perspective d'une modélisation d'un véhicule automobile selon un premier mode de réalisation de l'invention ;
[Fig.2] est une vue schématique en perspective d'une modélisation d'un véhicule automobile selon un deuxième mode de réalisation ;
[Fig.3] est une image initiale acquise par une caméra grand angle ;
[Fig.4] représente cinq images élémentaires initiales générées par le procédé de génération selon l'invention ;
[Fig.5] représente les champs de vision de cinq caméras virtuelles équipant le modèle de véhicule automobile de la [Fig.1] ou de la [Fig.2] ;
[Fig.6] représente le plan d'un capteur d'images de la caméra grand angle utilisée dans le procédé selon l'invention
[Fig.7] représente la déviation du faisceau lumineux induite par l'objectif de la caméra grand angle utilisée dans le procédé selon l'invention ;
[Fig.8] est un tableau illustrant les valeurs d'une première cartographie prédéterminée de distorsion ;
[Fig.9] est un tableau de valeurs fournissant les corrections à apporter pour corriger la distorsion des images acquises par la caméra grand angle ;
[Fig.10] représente cinq images élémentaires actualisées générées par le procédé de génération selon l'invention ;
[Fig.11] représente une image finale générée par le procédé selon l'invention ; et
[Fig.12] représente une scène tridimensionnelle telle qu'utilisée dans le deuxième exemple du procédé selon l'invention.

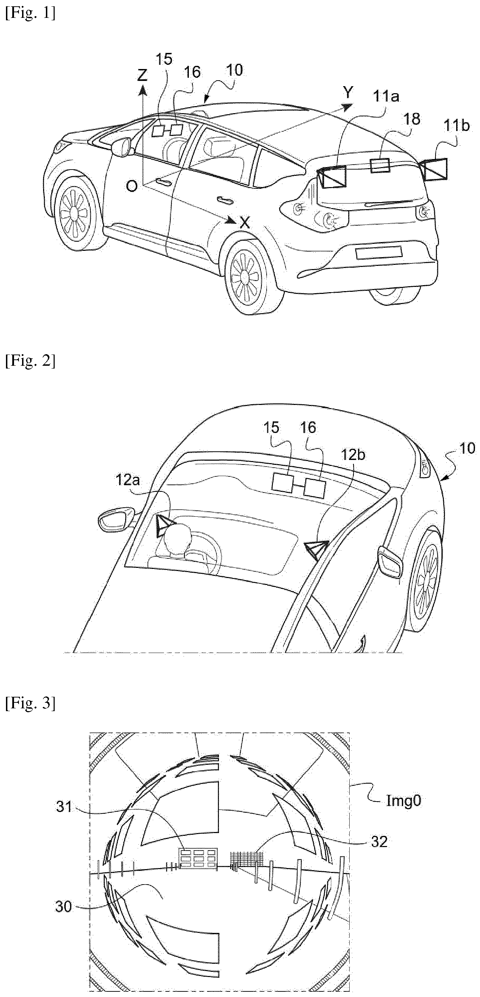

Sur les figures 1 et 2, on a représenté un modèle d'un véhicule automobile 10 (également appelé véhicule 10 dans la suite) auquel s'applique la présente invention. La présente invention s'applique en particulier lors de la phase de conception de ce véhicule automobile 10.

On définit également, par rapport au véhicule automobile 10, un repère véhicule orthonormé caractérisé par une origine O située au milieu de l'essieu avant, un axe longitudinal X orienté de l'avant vers l'arrière du véhicule, un axe latéral Y, et un axe Z vertical orienté vers le haut (le véhicule étant considéré à l'horizontal).

Le véhicule automobile 10 comprend un calculateur 15 et une mémoire 16. Grâce à sa mémoire, le calculateur 15 mémorise une application informatique, constituée de programmes d'ordinateur comprenant des instructions dont l'exécution par le processeur permet la mise en œuvre par le calculateur 15 des exemples de procédé décrits ci-après.

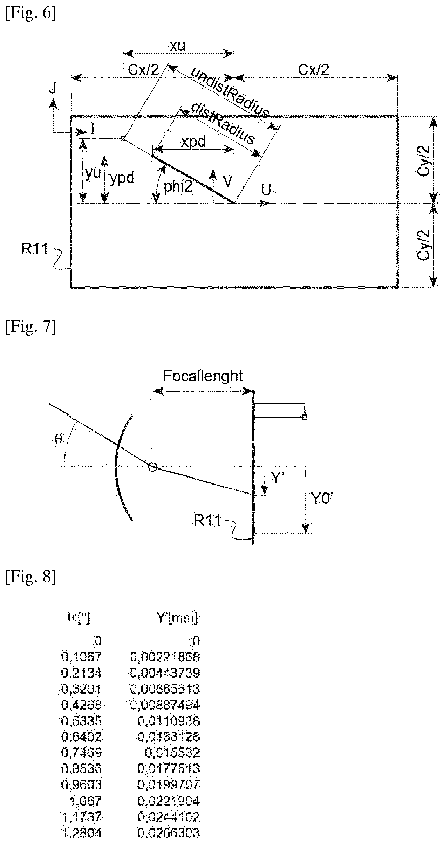

La mémoire 16 mémorise également des cartographies prédéterminées de distorsion telle que celle représentée par exemple sur la [Fig.8].

Le véhicule automobile 10 est prévu pour être équipé d'au moins une caméra grand angle 11a, 11b ; 12a, 12b de type « fish-eye » (aussi nommée « œil de poisson » en français). On entend ici par « caméra grand angle », une caméra dont l'objectif présente un angle de vision supérieur à la perception naturelle de l'œil humain.

De manière préférentielle, comme le montrent les figures 1 et 2, le véhicule automobile 10 est équipé de deux caméras grand angle 11a, 11b ; 12a, 12b de manière à observer les objets présents dans l'environnement du véhicule automobile 10 sous deux angles de vue différents.

Comme représenté sur la [Fig.1], les caméras grand angle 11a, 11b sont par exemple positionnées à l'arrière du véhicule automobile 10 et dirigées vers l'extérieur du véhicule 10. Plus précisément, les deux caméras grand angle 11a, 11b sont par exemple positionnées dans les parties extrêmes latérales hautes arrières du véhicule automobile 10 et par exemple orientées vers l'arrière et parallèlement à un axe longitudinal X du véhicule automobile 10.

En variante, les caméras grand angle 12a, 12b sont positionnées dans l'habitacle du véhicule automobile 10 de manière à surveiller le conducteur du véhicule 10 et les passagers ([Fig.2]). Dans ce cas, les deux caméras grand angle 12a, 12b sont par exemple positionnées dans les parties extrêmes latérales hautes avant de l'habitacle du véhicule 10. Les deux caméras grand angle 12a, 12b forment par exemple un angle de 45 degrés vers l'intérieur du véhicule 10 par rapport à l'axe longitudinal X du véhicule 10 et un angle de 45 degrés vers le bas par rapport à l'axe longitudinal X.

Chaque caméra grand angle 11a, 11b ; 12a, 12b comporte un objectif à grand angle (l'angle de son champ de vision est supérieur à 160 degrés) et un capteur d'images situés dans le plan focal image de cet objectif. Par exemple ici, chaque caméra grand angle 11a, 11b ; 12a, 12b présente un angle de vision horizontal de 180 degrés et un angle de vision vertical de 180 degrés.

On peut également définir les caractéristiques de chaque caméra grand angle 11a, 11b ; 12a, 12b de la façon suivante. La distance focale de la caméra grand angle 11a, 11b ; 12a, 12b est notée f. La largeur de son capteur d'images est notée cx. Sa hauteur est notée cy. Sa résolution horizontale est notée Resh. Sa résolution verticale est notée Resv.

Le véhicule automobile 10 est également équipé d'un système 18 de télédétection par lumière configuré pour scanner l'environnement du véhicule 10. Ce système 18 de télédétection par laser est par exemple un LIDAR (pour « *Light Detection and Ranging* »).

Comme représenté sur la [Fig.1], ce système 18 de télédétection par lumière est par exemple positionné entre les deux caméras grand angle 11a, 11b.

Ce système 18 de télédétection par lumière est par exemple configuré pour balayer l'environnement du véhicule 10 selon des couches verticales.

L'idée générale de la présente invention est, lorsque l'une au moins des caméras a été déplacée lors de la conception du véhicule alors que des images avaient été acquises par cette caméra lors d'un roulage d'essai, de modifier les images acquises pour obtenir les images qui auraient été acquises si la caméra avait été dans sa nouvelle position. L'idée est donc de générer une image finale Fin1 de l'environnement à partir d'une image initiale Img0 acquise pour une posture déterminée de la caméra grand angle. Dans cette description, on considère qu'une « posture déterminée » correspond à une orientation prédéterminée et une position prédéterminée du centre de la caméra grand angle dans le repère OXYZ.

Deux modes de réalisation distincts du procédé de génération selon l'invention sont alors introduits dans la suite.

Le premier mode de réalisation (figures 3 à 11) est le plus simple puisqu'il correspond au cas où les images finales et initiales sont proches.

Ce premier mode de réalisation est mis en œuvre lorsqu'une position actualisée du centre de la caméra grand angle est proche d'une position initiale du centre de la caméra grand angle (en d'autres termes, si la position de la caméra a peu changé). Plus précisément, dans ce premier mode de réalisation, la position actualisée du centre de la caméra grand angle est à une distance inférieure à 100 millimètres de la position initiale du centre de la caméra grand angle.

Ce premier mode de réalisation du procédé selon l'invention peut également être mis en œuvre lorsque les objets présents dans le champ de vision de la caméra grand angle sont situés à plusieurs mètres du centre de la caméra grand angle, par exemple à une distance supérieure à 15 mètres du véhicule automobile 10. En effet, dans ce cas, la vue de ces objets sera sensiblement la même, même si la caméra a été beaucoup déplacée.

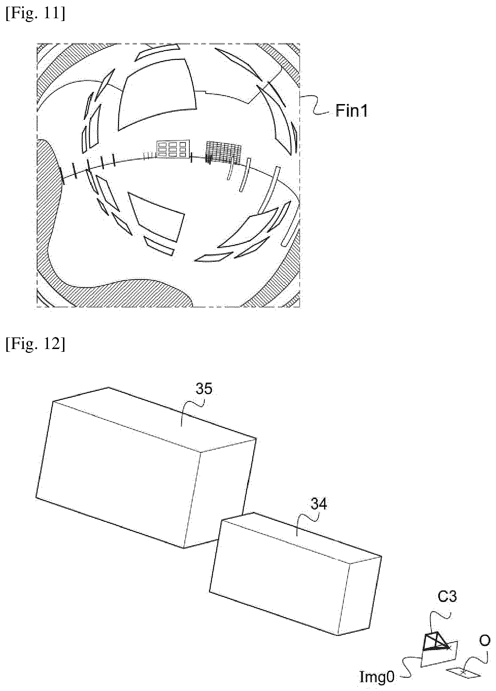

Le deuxième mode de réalisation ([Fig.12]), plus complexe, est sinon mis en œuvre. Il correspond donc au cas où la position actualisée du centre de la caméra grand angle est éloignée de la position initiale du centre de la caméra grand angle. Plus précisément, dans ce deuxième mode de réalisation, la position actualisée du centre de la caméra grand angle est à une distance supérieure à 100 millimètres de la position initiale du centre de la caméra grand angle.

Dans ce mode de réalisation, les objets présents dans le champ de vision de la caméra grand angle sont alors situés à proximité du véhicule automobile 10. Plus précisément, les objets présents dans le champ de vision de la caméra grand angle sont situés à une distance inférieure à 15 mètres du véhicule automobile 10.

On peut alors décrire le premier mode de réalisation d'un procédé de génération d'une image finale de l'environnement du véhicule automobile 10. Comme indiqué précédemment, ce procédé est mis en œuvre, par le calculateur 15, lors de la phase de conception du véhicule automobile 10.

Ce premier exemple de procédé est décrit par rapport à une seule caméra grand angle mais s'applique, par exemple, de la même manière à une autre caméra grand angle présente dans le véhicule automobile 10.

Initialement, la caméra grand angle 11a, 11b ; 12a, 12b présente une posture initiale dans un repère OXYZ associé au véhicule automobile 10 (ce repère est visible par exemple sur les figures 1 et 2). La posture initiale correspond donc ici à une orientation initiale et une position initiale du centre de la caméra grand angle 11a, 11b ; 12a, 12b concernée dans le véhicule automobile 10.

Le procédé comporte une première étape au cours de laquelle le véhicule automobile 10 se déplace sur une voie de circulation afin de valider la phase de développement courante.

Plus particulièrement, lors de ce déplacement, la caméra grand angle 11a, 11b ; 12a, 12b acquiert au moins une image initiale Img0 de l'environnement du véhicule automobile 10. Cette image initiale Img0 est donc acquise pour la posture initiale du caméra grand angle 11a, 11b ; 12a, 12b.

Comme cela est connu, un objectif d'une caméra grand angle déforme les images acquises par le capteur d'image. On parle alors de distorsion. La [Fig.3] représente ainsi l'image initiale Img0 distordue de l'environnement du véhicule automobile 10, telle qu'elle est acquise par la caméra grand angle 11a, 11b ; 12a, 12b. On y observe alors une vue déformée de la route 30 et d'immeubles 31, 32. Il s'agit d'une vue avec distorsion en forme de globe. Les déformations des lignes sont identiques à celles qu'on pourrait observer sur un miroir convexe.

Le déplacement du véhicule automobile 10 est ensuite interrompu mais le développement du véhicule automobile 10 se poursuit.

Au cours de ce développement, la caméra grand angle 11a, 11b ; 12a, 12b est déplacée. Plus particulièrement, lors de cette étape, la caméra grand angle 11a, 11b ; 12a, 12b présente une posture actualisée différente de la posture initiale. En d'autres termes, à l'étape E10, la caméra grand angle 11a, 11b ; 12a, 12b présente une orientation actualisée et/ou une position actualisée du centre de la caméra grand angle 11a, 11b ; 12a, 12b différentes des paramètres de la posture initiale.

Plus précisément, la modification de posture de la caméra grand angle correspond à une transformation de changement de repère. Cette transformation prend en compte un changement d'axe et/ou un changement de position du centre de la caméra grand angle 11a, 11b ; 12a, 12b.

Alors, le calculateur 15 mémorise, dans la mémoire 16, les éléments caractéristiques de cette transformation de changement de repère. Ces éléments caractéristiques sont par exemple renseignés par le concepteur du véhicule automobile 10.

Le procédé se poursuit lors d'une nouvelle étape au cours de laquelle l'image initiale Img0 acquise, distordue, est décomposée en au moins deux images élémentaires initiales de type non distordu. Dans cette description, on notera que la dénomination « de type non distordu » est équivalente à la dénomination de « de type sténopé ».

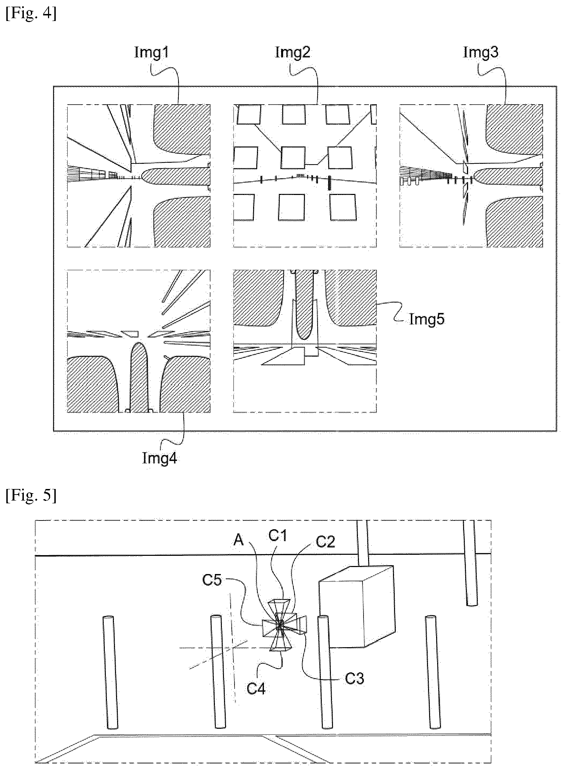

Par exemple, cinq images élémentaires initiales Img1, Img2, Img3, Img4, Img5 au plus sont obtenues. La [Fig.4] représente des exemples d'images élémentaires initiales Img1, Img2, Img3, Img4, Img5 issues de l'image initiale Img0 distordue représentée sur la [Fig.3].

Chacune des images élémentaires initiales Img1, Img2, Img3, Img4, Img5 correspond à une image qui serait obtenue par une caméra (ci-après appelée caméra virtuelle) équipant le véhicule automobile 10 et dont la focale serait plus longue que la focale de la caméra grand angle 11a, 11b ; 12a, 12b (son champ de vision présentant alors des angles d'ouvertures très inférieurs à 160 degrés). L'image obtenue par une telle caméra virtuelle serait de type non distordu.

La [Fig.5] représente cinq caméras virtuelles C1, C2, C3, C4, C5 équipant le véhicule automobile 10 et permettant d'obtenir les cinq images élémentaires initiales Img1, Img2, Img3, Img4, Img5 représentées sur la [Fig.4].

La caméra virtuelle C1 est dirigée vers le haut du véhicule 10 et permet d'obtenir l'image Img5.

La caméra virtuelle C2 est dirigée vers la droite du véhicule 10 et permet d'obtenir l'image Img1.

La caméra virtuelle C3 est dirigée vers l'arrière du véhicule 10 et permet d'obtenir l'image Img2.

La caméra virtuelle C4 est dirigée vers le bas du véhicule 10 et permet d'obtenir l'image Img4.

La caméra virtuelle C5 est dirigée vers la gauche du véhicule 10 et permet d'obtenir l'image Img3.

Comme cela est représenté sur la [Fig.5], toutes les caméras virtuelles C1, C2, C3, C4, C5 présentent le même centre A. Les axes des caméras virtuelles C1 et C4 sont confondus et parallèles à l'axe vertical Z du repère du véhicule automobile 10. Les axes des caméras virtuelles C2 et C5 sont confondus et parallèles à l'axe transversal Y du repère du véhicule automobile 10. L'axe de la caméra virtuelle C3 est parallèle à l'axe longitudinal X du repère du véhicule automobile 10.

En pratique, la détermination des images élémentaires initiales Img1, Img2, Img3, Img4, Img5 est réalisée pixel par pixel, à partir de chacun des pixels de l'image initiale img0.

De manière générale, afin de garantir une meilleure qualité des images élémentaires initiales, la demanderesse a observé que la génération des images élémentaires initiales Img1, Img2, Img3, Img4, Img5 devait être réalisée en partant des images élémentaires initiales (vides), en balayant chaque pixel de ces images et en déterminant, à partir d'un pixel d'une image élémentaire initiale (non distordue), le pixel correspondant dans l'image initiale (distordue).

Pour cela, il est prévu d'utiliser une première cartographie prédéterminée de distorsion fournie par le fabricant de la caméra grand angle 11a, 11b : 12a, 12b et qui est initialement prévue pour corriger la distorsion des images qui seront acquises par cette caméra. Bien entendu, en variante, on pourrait utiliser un modèle mathématique pour réaliser cette opération.

Ici, cette première cartographie prédéterminée de distorsion permet d'associer chaque pixel de l'image initiale Img0 acquise par la caméra grand angle 11a, 11b ; 12a, 12b à un pixel d'une image élémentaire initiale Img1, Img2, Img3, Img4, Img5.

Pour cela, la [Fig.6] représente un rectangle R11 représentant le capteur d'images de la caméra grand angle 11a, 11b ; 12a, 12b.

Un repère (I, J) orthonormé et bidimensionnel est également représenté. Il comporte un axe I horizontal et un axe J. Il est centré sur un coin du capteur d'images.

On a également représenté un repère (U, V) identique au repère (I, J), à ceci près qu'il est centré au centre du capteur d'images.

Si on se réfère à la [Fig.6], un pixel de coordonnées (i, j) dans le repère (I, J) pourra s'exprimer dans le repère (U, V) au moyen des coordonnées $(x_u, y_u)$ calculées de la façon suivante (coordonnées exprimées ici en pixel) :

[Math.1]

$$\begin{cases} x_u = i - \dfrac{Resh}{2} \\ y_u = j - \dfrac{Resv}{2} \end{cases}$$

Les coordonnées du pixel considéré s'expriment alors, dans le plan du capteur d'images, par les équations suivantes (données ici en millimètres) :

[Math.2]

$$\begin{cases} X_u = \dfrac{x_u * 3 * cx}{Resh} \\ Y_u = \dfrac{y_u * 3 * cy}{Resv} \end{cases}$$

Le rayon non distordu correspondant au pixel de l'image élémentaire initiale sans distorsion est de la forme suivante :

[Math.3]
$$undistRadius = \sqrt{X_u.X_u + Y_u.Y_u}$$

L'angle phi2 entre l'abscisse U de ce repère (U, V) et le pixel considéré pourra être calculé au moyen de la formule mathématique suivante :

[Math.4]

$$phi2 = \arccos \left( \frac{X_u}{undistRadius} \right)$$

Sur la [Fig.7], on a représenté la façon dont un rayon de lumière est dévié par l'objectif grand angle de la caméra grand angle 11a, 11b ; 12a, 12b. On observe ainsi qu'un rayon de lumière arrivant sur la caméra avec un angle d'incidence THETA et qui devrait impacter le capteur d'images à une hauteur Y'0 est dévié et impacte le capteur d'images à une hauteur Y'.

En pratique, pour corriger les images distordues de façon simple, le fabricant de la caméra grand angle fournit alors un tableau de correspondance tel que celui représenté sur la [Fig.8].

Connaissant la valeur de la hauteur Y'0 et donc de l'angle THETA, ce tableau de correspondance permet d'identifier la hauteur correspondante Y' du pixel dévié du fait des effets de distorsion.

Ce tableau peut donc être utilisé pour corriger les effets de distorsion. Grâce à ce tableau, il est possible de déduire la valeur de l'angle THETA en fonction du rayon correspondant au pixel de l'image élémentaire initiale sans distorsion, selon l'équation suivante (l'angle THETA étant ici exprimé en radians) :

[Math.5]

$$THETA\_rad = \arctan \left( undistRadius \right)$$

Comme indiqué précédemment, afin d'obtenir une qualité optimale des images élémentaires initiales, les pixels de l'image initiale Img0 distordue sont recherchés ici. Plus particulièrement, pour le pixel considéré précédemment de l'image élémentaire initiale Img1, Img2, Img3, Img4, Img5, et pour lequel le rayon non distordu a été déterminé, on cherche le pixel correspondant de l'image initiale Img0 distordue.

Le rayon entre le centre du repère (U, V) et le pixel considéré de l'image initiale Img0 distordue peut être calculé au moyen de la formule mathématique suivante :

[Math.6]

$$distRadius = R1 * THETA\_rad$$

avec R1, un coefficient de correction de la distorsion appliquée.

Le coefficient de correction de la distorsion présente par une forme polynomiale fonction de l'angle THETA_rad. Le polynôme est par exemple de degré au moins égal à 6, de préférence au moins égal à 7.

Par exemple ici, le coefficient de correction de la distorsion s'exprime sous la forme du polynôme suivant :

[Math.7]

$$R1 = c1*(THETA\_rad)^7 + c2*(THETA\_rad)^6 + c3*(THETA\_rad)^5 + c4*(THETA\_rad)^4 + c5*(THETA\_rad)^3 + c6*(THETA\_rad)^2 + c7*THETA\_rad + c8$$

avec c1, c2, c3, c4, c5, c6, c7 et c8 les coefficients du polynôme représentant le coefficient de correction de la distorsion R1.

Pour déterminer les coefficients du polynôme, il est prévu d'utiliser une deuxième cartographie prédéterminée de distorsion. Bien entendu, en variante, on pourrait utiliser un modèle mathématique pour réaliser cette opération.

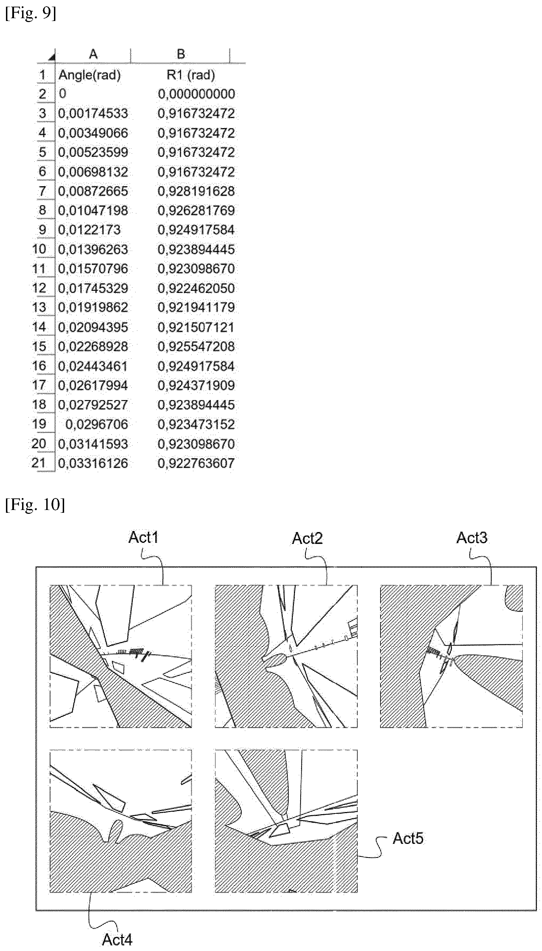

Ici, cette deuxième cartographie prédéterminée de distorsion permet d'associer chaque angle THETA_rad à la valeur du coefficient de correction de la distorsion. Une partie de cette deuxième cartographie prédéterminée de distorsion est représentée sous forme de tableau sur la [Fig.9].

Une fois le rayon distordu déterminé, il est alors possible de déduire les coordonnées du pixel correspondant dans l'image initiale Img0 distordue (et correspondant donc au pixel de l'image élémentaire initiale Img1, Img2, Img3, Img4, Img5 non distordue) :

[Math.8]

$$\begin{cases} x_{pd} = int\left[ \dfrac{distRadius*\cos\,(\,phi2\,)\,*Resh}{cx} \right] + \dfrac{Resh}{2} \\[3mm] y_{pd} = int\left[ \dfrac{distRadius*\sin\,(\,phi2\,)\,*Resv}{cy} \right] + \dfrac{Resv}{2} \end{cases}$$

avec int[a] la notation correspondant à la partie entière du nombre a.

Ainsi, le pixel dans l'image initiale Img0 (distordue) correspondant au pixel (vide) de l'image élémentaire initiale (non distordue) est identifié. Il suffit alors d'affecter les caractéristiques de couleurs (RGB) du pixel $(x_{pd}, y_{pd})$ dans l'image initiale Img0 au pixel (i, j) de l'image élémentaire initiale Img1, Img2, Img3, Img4, Img5.

Il est donc possible de reconstruire chacune des images élémentaires initiales Img1, Img2, Img3, Img4, Img5 en appliquant les opérations décrites à l'ensemble des pixels des images élémentaires initiales Img1, Img2, Img3, Img4, Img5.

A ce stade, les images élémentaires initiales Img1, Img2, Img3, Img4, Img5 non distordues ont donc été déterminées à partir de l'image initiale Img0 distordue acquise.

Le procédé se poursuivant, le calculateur 15 détermine des images élémentaires actualisées Act1, Act2, Act3, Act4, Act5. Ces images élémentaires actualisées Act1, Act2, Act3, Act4, Act5 sont obtenues en prenant en compte la transformation de changement de repère correspondant à la modification de posture subie par la caméra grand angle 11a, 11b ; 12a, 12b à l'étape E10. Les caractéristiques de cette transformation de changement de repère identifiées par le calculateur 15 sont donc ici appliquées à chaque pixel des images élémentaires initiales Img1, Img2, Img3, Img4, Img5 pour déterminer chaque pixel correspondant des images élémentaires actualisées Act1, Act2, Act3, Act4, Act5.

Comme exprimé précédemment, un pixel d'une image élémentaire initiale Img1, Img2, Img3, Img4, Img5 de coordonnées (i, j) dans le repère (I, J) peut s'exprimer dans le repère (U, V) au moyen des coordonnées $(x_u, y_u)$ calculées de la façon suivante (coordonnées exprimées ici en pixel) :

[Math.9]

$$\begin{cases} x_p = i - \dfrac{Resh}{2} \\[3mm] y_p = j - \dfrac{Resv}{2} \end{cases}$$

La position tridimensionnelle de ce pixel dans le repère associé à la caméra grand angle 11a, 11b ; 12a, 12b s'exprime alors de la manière suivante :

[Math.10]

$$\begin{cases} x_{ini} = f \\[3mm] y_{ini} = -\dfrac{x_p*c}{Resh} \\[3mm] z_{ini} = -\dfrac{y_p*c}{Resv} \end{cases}$$

Dans la suite, la transformation de changement de repère est présentée pour les pixels de l'image élémentaire initiale Img2 centrale (telle que celle représentée sur la [Fig.4]) mais cette transformation s'applique de manière similaire aux autres images élémentaires initiales Img1, Img3, Img4, Img5.

Dans un premier exemple, on considère que la transformation de changement de repère consiste en deux rotations. En d'autres termes, l'axe de la caméra grand angle 11a, 11b ; 12a, 12b a subi deux rotations :

- d'un angle angle_prad autour de l'axe latéral Y du repère associé au véhicule automobile 10, et
- d'un angle angle_yrad autour de l'axe vertical Z de repère associé au véhicule automobile 10.

Les images élémentaires actualisées Act1, Act2, Act3, Act4, Act5 sont donc déterminées en appliquant ces deux rotations à chacun des pixels des images élémentaires initiales Img1, Img2, Img3, Img4, Img5 correspondantes.

Plus particulièrement, pour l'image élémentaire initiale Img2 centrale représentée sur la [Fig.4], les coordonnées tridimensionnelles d'un point P1 d'intersection entre un plan à une profondeur fixée (par exemple ici une profondeur égale à 3000 mm) et une droite reliant le centre de la caméra grand angle 11a, 11b ; 12a, 12b et chaque pixel de cette image élémentaire initiale Img2 sont données par :

[Math.11]
$$\begin{cases} x_{fin} = 3000 \\ y_{fin} = \dfrac{x_{fin} * y_{ini}}{x_{ini}} \\ z_{fin} = \dfrac{x_{fin} * z_{fin}}{x_{ini}} \end{cases}$$

La rotation d'angle Angle_prad est appliquée à ce point d'intersection P1. Le point P2 résultant présente les coordonnées suivantes :

[Math.12]
$$\begin{cases} x_{fin2} = x_{fin} * \cos(Angle\_prad) + z_{fin} * \sin(Angle\_prad) \\ y_{fin2} = y_{fin} \\ z_{fin2} = x_{fin} * \sin(Angle\_prad) - z_{fin} * \cos(Angle\_prad) \end{cases}$$

La rotation d'angle Angle_yrad est appliquée à ce point d'intersection P2. Le point P3 résultant présente les coordonnées suivantes :

[Math.13]
$$\begin{cases} x_{fin22} = x_{fin2} * \cos(Angle\_yrad) + y_{fin2} * \sin(Angle\_yrad) \\ y_{fin22} = x_{fin2} * \sin(Angle\_yrad) - y_{fin2} * \cos(Angle\_yrad) \\ z_{fin22} = z_{fin2} \end{cases}$$

On détermine ensuite la position tridimensionnelle du point final Pf correspondant à l'intersection entre le plan focal de la caméra grand angle 11a, 11b ; 12a, 12b et la droite reliant le centre de la caméra grand angle 11a, 11b ; 12a, 12b et le point P3. Les coordonnées de ce point final Pf sont données par les équations suivantes :

[Math.14]

$$\begin{cases} x_{f\,in3} = f \\ y_{f\,in3} = \dfrac{x_{f\,in3}*y_{f\,in22}}{x_{f\,in22}} \\ z_{f\,in3} = \dfrac{x_{f\,in3}*z_{f\,in22}}{x_{f\,in22}} \end{cases}$$

Les coordonnées du pixel correspondant dans l'image élémentaire actualisée Act2 correspondante sont alors données par :

[Math.15]

$$\begin{cases} i_{f\,in} = - \left( \dfrac{Resh}{c} \right) * y_{f\,in3} + \dfrac{Resh}{2} \\ j_{f\,in} = \left( \dfrac{Resv}{c} \right) * z_{f\,in3} + \dfrac{Resv}{2} \end{cases}$$

Ces opérations sont mises en œuvre pour l'ensemble des pixels de l'image élémentaire initiale Img1, Img2, Img3, Img4, Img5 concernée et pour l'ensemble des pixels de toutes les images élémentaires. Bien entendu, les calculs présentés ci-dessus pour l'image élémentaire initiale Img2 centrale doivent être adaptés pour être appliqués aux autres images élémentaires initiales Img1, Img3, Img4, Img5.

Par exemple, pour l'image élémentaire initiale Img1 gauche représentée sur la [Fig.4] , la rotation d'angle Angle_prad appliquée aux coordonnées de la position initiale de chaque pixel résulte en les coordonnées suivantes :

[Math.16]

$$\begin{cases} x_{f\,in1} = x_{ini} \\ y_{f\,in1} = y_{ini}*\cos\left(Angle\_prad\right) - z_{ini}*\sin\left(-Angle\_prad\right) \\ z_{f\,in1} = y_{ini}*\sin\left(-Angle\_prad\right) + z_{ini}*\cos\left(Angle\_prad\right) \end{cases}$$

Les coordonnées tridimensionnelles d'un point P1' d'intersection entre un plan à une profondeur fixée (par exemple ici une profondeur égale à 3000 mm) et une droite reliant le centre de la caméra grand angle 11a, 11b ; 12a, 12b et chaque nouveau pixel de cette image élémentaire initiale Img1 obtenu après application de la rotation d'angle Angle_rad sont données par :

[Math.17]

$$\begin{cases} x_{f\,in2l} = 3000 \\ y_{f\,in2l} = \dfrac{x_{f\,in2l}*y_{f\,in1}}{x_{f\,in1}} \\ z_{f\,in2l} = \dfrac{x_{f\,in2l}*z_{f\,in1}}{x_{f\,in1}} \end{cases}$$

La rotation d'angle Angle_yrad est appliquée à ce point d'intersection P1'. Le point P2' résultant présente les coordonnées suivantes :

[Math.18]

$$\begin{cases} x_{f\,in22l} = x_{f\,in2l} * \cos\,(Angle\_yrad) - y_{f\,in2l} * \sin\,(Angle\_yrad) \\ y_{f\,in22l} = x_{f\,in2l} * \sin\,(Angle\_yrad) + y_{f\,in2l} * \cos\,(Angle\_yrad) \\ z_{f\,in22l} = z_{f\,in2l} \end{cases}$$

On détermine ensuite la position tridimensionnelle du point final Pf' correspondant à l'intersection entre le plan focal de la caméra grand angle 11a, 11b ; 12a, 12b et la droite reliant le centre de la caméra grand angle 11a, 11b ; 12a, 12b et le point P2'. Les coordonnées de ce point final Pf' sont données par les équations suivantes :

[Math.19]

$$\begin{cases} x_{f\,in3l} = f \\ y_{f\,in3l} = \dfrac{x_{f\,in3l} * y_{f\,in22l}}{x_{f\,in22l}} \\ z_{f\,in3l} = \dfrac{x_{f\,in3l} * z_{f\,in22l}}{x_{f\,in22l}} \end{cases}$$

Les coordonnées du pixel correspondant dans l'image élémentaire actualisée Act1 correspondante sont alors données par :

[Math.20]

$$\begin{cases} i_{f\,inl} = -\left(\dfrac{Resh}{C}\right) * y_{f\,in3l} + \dfrac{Resh}{2} \\ j_{f\,inl} = \left(\dfrac{Resv}{C}\right) * z_{f\,in3l} + \dfrac{Resv}{2} \end{cases}$$

La [Fig.10] représente un exemple des images élémentaires actualisées Act1, Act2, Act3, Act4, Act5 correspondant aux images élémentaires initiales Img1, Img2, Img3, Img4, Img5 représentées sur la [Fig.4] et pour lesquelles la transformation de changement de repère consiste en deux rotations d'angle Angle_prad = 20 degrés et Angle_rad = 20 degrés.

Dans un deuxième exemple, on considère que la transformation de changement de repère consiste un changement de centre de la caméra grand angle 11a, 11b ; 12a, 12b. En d'autres termes, le centre de la caméra grand angle 11a, 11b ; 12a, 12b subit un déplacement et les coordonnées du nouveau centre de la caméra grand angle sont les suivantes : (X_new_center, Y_new_center, Z_new_center).

Les images élémentaires actualisées Act1, Act2, Act3, Act4, Act5 sont donc déterminées en appliquant de changement de centre à chacun des pixels des images élémentaires initiales Img1, Img2, Img3, Img4, Img5 correspondantes.

Plus particulièrement, pour l'image élémentaire initiale Img2 centrale représentée sur la [Fig.4], les coordonnées tridimensionnelles d'un point P1 d'intersection entre un plan à une profondeur fixée (par exemple ici une profondeur égale à 3000 mm) et une droite reliant le centre de la caméra grand angle 11a, 11b ; 12a, 12b et chaque pixel de cette image élémentaire initiale Img2 sont données par :

[Math.21]

$$\begin{cases} x_{f\,in} = 3000 \\ y_{f\,in} = \dfrac{x_{f\,in}*y_{ini}}{x_{ini}} \\ z_{f\,in} = \dfrac{x_{f\,in}*z_{f\,in}}{x_{ini}} \end{cases}$$

Le changement de centre appliqué à ce point P1 résulte en un point P4 de coordonnées :

[Math.22]

$$\begin{cases} x_{f\,in4} = x_{f\,in} - X_{new\_center} \\ y_{f\,in4} = y_{f\,in} - Y_{new\_center} \\ z_{f\,in4} = z_{f\,in} + Z_{new\_center} \end{cases}$$

On détermine ensuite la position tridimensionnelle du point final Pff correspondant à l'intersection entre le plan focal de la caméra grand angle 11a, 11b ; 12a, 12b et la droite reliant le centre de la caméra grand angle 11a, 11b ; 12a, 12b et le point P4. Les coordonnées de ce point final Pff sont données par les équations suivantes :

[Math.23]

$$\begin{cases} x_{f\,in5} = f \\ y_{f\,in5} = \dfrac{x_{f\,in5}*y_{f\,in4}}{x_{f\,in4}} \\ z_{f\,in5} = \dfrac{x_{f\,in5}*z_{f\,in4}}{x_{f\,in4}} \end{cases}$$

Les coordonnées du pixel correspondant dans l'image élémentaire actualisée Act2 sont alors données par :

[Math.24]

$$\begin{cases} i_{f\,int} = -\left(\dfrac{Resh}{c}\right)*y_{f\,in5} + \dfrac{Resh}{2} \\ j_{f\,int} = \left(\dfrac{Resv}{c}\right)*z_{f\,in5} + \dfrac{Resv}{2} \end{cases}$$

Ces opérations sont mises en œuvre pour l'ensemble des pixels de l'image élémentaire initiale Img1, Img2, Img3, Img4, Img5 concernée et pour l'ensemble des pixels de toutes les images élémentaires initiales Img1, Img2, Img3, Img4, Img5.

Une fois les images élémentaires actualisées Act1, Act2, Act3, Act4, Act5 (non distordues) obtenues, le procédé se poursuit. Pour cela, ces images élémentaires actualisées Act1, Act2, Act3, Act4, Act5 sont combinées de manière à obtenir une image finale Fin1 distordue. La distorsion obtenue correspond à un champ de vision présentant un angle de vision horizontal de 180 degrés et un angle de vision vertical de 180 degrés.

La méthode permettant de générer cette image finale Fin1 distordue à partir d'images élémentaires actualisées Act1, Act2, Act3, Act4, Act5 non distordues est décrite en détails dans le document FR3100314. Comme elle ne constitue pas le cœur de l'invention, elle ne sera pas décrite plus en détails ici.

La [Fig.11] montre un exemple d'image finale distordue obtenue à partir des images élémentaires actualisées Act1, Act2, Act3, Act4, Act5 représentées sur la [Fig.10].

Le procédé comprend enfin une dernière étape d'amélioration de l'image finale Fin1. Cette étape vise notamment à éliminer les éléments dits parasites présent dans une partie périphérique de l'image finale. En effet, la partie périphérique d'une image distordue est celle qui présente le plus fort coefficient de distorsion.

En pratique, cette dernière étape consiste à réduire le champ de l'image finale afin d'obtenir une image finale améliorée.

On peut maintenant décrire le deuxième mode de réalisation précédemment introduit du procédé de génération d'une image finale. Comme indiqué précédemment, ce procédé est mis en œuvre, par le calculateur 15, lors de la phase de conception du véhicule automobile 10, lorsque le changement de posture de la caméra risque de modifier sensiblement les images acquises.

Ce deuxième exemple de procédé est également décrit par rapport à une seule caméra grand angle mais s'applique, par exemple, de la même manière à une autre caméra grand angle présente dans le véhicule automobile 10.

Les premières étapes du procédé selon ce deuxième mode de réalisation sont similaires à celles du premier mode de réalisation décrit précédemment. Ainsi, on considère que la caméra grand angle 11a, 11b ; 12a, 12b présente une posture initiale et acquiert au moins une image initiale Img0 de l'environnement du véhicule automobile 10 à la faveur d'un roulage d'essai.

Simultanément à cette acquisition de l'image initiale Img0, le système 18 de télédétection par lumière équipant le véhicule automobile 10 balaie l'environnement de ce véhicule 10 de manière à former des nuages de points des objets présents dans cet environnement.

Le système 18 de télédétection par lumière balaie par exemple l'environnement du véhicule automobile 10 selon des couches verticales. Ici, le système 18 de télédétection par lumière scanne par exemple l'environnement du véhicule 10 selon 32 couches verticales, avec une résolution horizontale de 0,1 degré et un champ de vision horizontal de 180 degrés.

Les nuages de points sont formés par les intersections entre les surfaces externes des objets présents dans l'environnement du véhicule et les chemins des rayons lumineux émis par le système 18 de télédétection par lumière. Chacun des points est par exemple repéré par ses coordonnées dans le repère du véhicule automobile 10.

A ce stade, comme le montre la [Fig.12], il est alors possible de représenter, par exemple par l'intermédiaire d'un outil de conception assistée par ordinateur (communément dénommé par l'acronyme « outil CAD »), une scène tridimensionnelle illustrant l'environnement du véhicule automobile 10.

La caméra grand angle 11a ainsi que l'image initiale acquise sont également positionnées dans cette scène tridimensionnelle. La [Fig.12] représente un exemple d'une telle scène tridimensionnelle avec les objets 34, 35 présents dans l'environnement du véhicule 10, la caméra grand angle C3 et l'image initiale acquise Img0.

Le roulage étant interrompu, le procédé se poursuit en décomposant, de la même façon que dans le premier mode de réalisation, l'image initiale Img0 acquise, distordue, en au moins deux images élémentaires initiales (ici en cinq images élémentaires initiales Img1, Img2, Img3, Img4, Img5).

Ces cinq images élémentaires initiales Img1, Img2, Img3, Img4, Img5 sont également positionnées dans la scène tridimensionnelle représentant l'environnement du véhicule automobile 10.

La caméra grand angle 11a, 11b ; 12a, 12b est ensuite déplacée au cours de la poursuite de la conception du modèle du véhicule automobile. Comme décrit précédemment, lors de cette étape, la posture de la caméra grand angle 11a est actualisée.

Cette fois, l'idée pour former l'image finale va être de ne pas s'appuyer seulement sur l'image initiale, qui ne contient pas assez d'information pour cela, mais aussi sur le nuage de points acquis.

Ainsi, le procédé se poursuit par une étape de reconstruction de la surface de chaque objet identifié dans l'environnement du véhicule automobile 10. Le calculateur 15 effectue par exemple cette reconstruction par l'intermédiaire d'un logiciel mémorisé dans la mémoire 16.

Cette reconstruction est réalisée à partir des nuages de points obtenus et des images élémentaires initiales Img1, Img2, Img3, Img4, Img5 générées 2. De manière générale, cette étape consiste à déterminer la texture de la surface des objets présents dans l'environnement du véhicule automobile 10.

Pour cela, pour chaque pixel d'une image élémentaire initiale Img1, Img2, Img3, Img4, Img5, une droite passant par ce pixel et le centre de la caméra grand angle 11a est déterminée. Cette droite présente une intersection avec le nuage de points déterminé, en un point $P_{int}$. La caractéristique RGB du pixel concerné de l'image élémentaire initiale Img1, Img2, Img3, Img4, Img5 est affectée à ce point d'intersection P int•

Cette opération de reconstruction est effectuée pour l'ensemble des pixels des images élémentaires initiales Img1, Img2, Img3, Img4, Img5. La texture de la surface des objets présents dans l'environnement du véhicule automobile 10 est donc obtenue pour tous les points des nuages de points ayant une correspondance avec ces pixels.

Le procédé se poursuit ensuite par une étape de génération des images élémentaires actualisées Act1, Act2, Act3, Act4, Act5. Pour cela, des images élémentaires actualisées aux pixels vides sont utilisées. Ces images élémentaires actualisées sont positionnées dans la scène tridimensionnelle introduite précédemment. Chaque pixel de chaque image élémentaire actualisée est ensuite généré.

Pour cela, pour chaque pixel d'une image élémentaire actualisée Act1, Act2, Act3, Act4, Act5, une autre droite passant par ce pixel et le centre de la caméra grand angle 11a (à sa posture actualisée) est déterminée. Cette autre droite présente également une intersection avec le nuage de points en un point d'intersection affecté de sa caractéristique RGB.

Cette opération permet alors de générer, pixel par pixel, chaque image élémentaire actualisée Act1, Act2, Act3, Act4, Act5. Comme la caméra grand angle a été déplacée à sa posture actualisée avant la détermination de l'autre droite, les images élémentaires actualisées Act1, Act2, Act3, Act4, Act5 générées selon l'opération décrite ci-dessus tiennent compte directement de la transformation de changement de repère observée par la caméra grand angle.

A ce stade, on obtient donc des images élémentaires actualisées Act1, Act2, Act3, Act4, Act5 non distordues.

Le procédé se poursuit alors de la même manière que dans le premier mode de réalisation, en combinant les images élémentaires actualisées Act1, Act2, Act3, Act4, Act5 de manière à obtenir une image finale Fin1 distordue, et en supprimant le bord périphérique de cette image finale afin de l'améliorer.

## Revendications

1.  Procédé de génération d'une image finale (Fin1) de l'environnement d'un véhicule automobile (10), ledit véhicule automobile (10) étant équipé d'un capteur d'image (11a, 11b ; 12a, 12b) muni d'un objectif à grand angle, ledit procédé comprenant des étapes de :

    - acquisition d'une image initiale (Img0) de type distordu par ledit capteur d'image (11a, 11b ; 12a, 12b) positionné à une posture initiale par rapport au véhicule automobile (10) ;
    - déplacement dudit capteur d'image (11a, 11b ; 12a, 12b) en une posture actualisée ;
    - génération, à partir de ladite image initiale (Img0), d'au moins deux images élémentaires initiales (Imgl, Img2, Img3, Img4, Img5) de type non distordu, chacune des images élémentaires initiales (Imgl, Img2, Img3, Img4, Img5) correspondant à une image qui serait obtenue par une caméra virtuelle équipant le véhicule automobile (10) et dont la focale serait plus longue que la focale du capteur d'image (11a, 11b; 12a, 12b) muni d'un objectif à grand angle ;
    - détermination d'images élémentaires actualisées (Actl, Act2, Act3, Act4, Act5) par application, à chaque image élémentaire initiale (Imgl, Img2, Img3, Img4, Img5), d'une transformation de changement de repère correspondant à la modification de la posture initiale du capteur d'image (11a, 11b ; 12a, 12b) en la posture actualisée, et
    - génération de l'image finale (Fin1) en combinant lesdites images élémentaires actualisées (Actl, Act2, Act3, Act4, Act5).

2.  Procédé selon la revendication 1, dans lequel l'étape de génération desdites images élémentaires initiales (Imgl, Img2, Img3, Img4, Img5) comprend des sous-étapes de :

    - mémorisation d'une carte prédéterminée de distorsion associant à des valeurs prédéterminées d'un angle d'incidence d'un rayon arrivant sur le capteur d'image (11a, 11b ; 12a, 12b) des valeurs correspondantes d'un coefficient de correction (R1) de la distorsion, et
    - détermination de la correction de distorsion, pour chaque pixel d'une image élémentaire initiale (Imgl, Img2, Img3, Img4, Img5), sur la base de ladite carte prédéterminée de distorsion.

3.  Procédé selon la revendication 2, dans lequel le coefficient de correction (R1) de la distorsion est de la forme d'un polynôme de degré au moins égal à 6.

4.  Procédé selon l'une quelconque des revendications 1 à 3, dans lequel ladite transformation de changement de repère prend en compte un changement d'axe et/ou un changement de centre dudit capteur d'image (11a, 11b ; 12a, 12b).

5.  Procédé selon l'une quelconque des revendications 1 à 4, comprenant également une étape d'amélioration de l'image finale (Fin1) en réduisant une partie périphérique de ladite image finale.

6.  Procédé selon l'une quelconque des revendications 1 à 5, comprenant également, lorsque le centre de la posture actualisée dudit capteur d'image (11a, 11b ; 12a, 12b) est éloigné du centre de la posture initiale dudit capteur d'image (11a, 11b ; 12a, 12b) et lorsque des objets (34, 35) présents dans l'environnement du véhicule automobile (10) sont situés à proximité dudit véhicule (10), une étape de détermination, sur la base de données acquises par un système (18) de télédétection par lumière équipant ledit véhicule automobile (10), des coordonnées de points d'un nuage de points caractérisant les formes et positions des objets (34, 35) présents dans l'environnement du véhicule automobile (10), dans le champ dudit système (18) de télédétection par lumière, les images élémentaires actualisées (Actl, Act2, Act3, Act4, Act5) étant déterminées en fonction desdites coordonnées des points du nuage de points.

7. Procédé selon la revendication 6, comprenant également des étapes de :

- identification de chaque point dudit nuage de points déterminé par rapport aux objets (34, 35) présents dans l'environnement du véhicule automobile (10) par association de chacun des points dudit nuage de points déterminé à un pixel correspondant de l'une des images élémentaires initiales (Imgl, Img2, Img3, Img4, Img5),
- détermination d'une caractéristique de texture de chaque point identifié du nuage de points sur la base d'une caractéristique de texture du pixel correspondant de l'une des images élémentaires initiales (Imgl, Img2, Img3, Img4, Img5),
- reconstitution des images élémentaires actualisées (Actl, Act2, Act3, Act4, Act5) à partir de chaque point du nuage de points affecté de la caractéristique de texture correspondante par association dudit point à un pixel correspondant de l'une des images élémentaires actualisées (Actl, Act2, Act3, Act4, Act5).

8. Procédé selon l'une quelconque des revendications 1 à 7, dans lequel les images élémentaires initiales (Imgl, Img2, Img3, Img4, Img5) sont générées virtuellement dans un environnement virtuel dans lequel le véhicule automobile (10) est modélisé.

9. Véhicule automobile (10) comprenant un capteur d'image d'un capteur d'image muni d'un objectif à grand angle et un calculateur (15) configuré pour mettre en œuvre le procédé selon l'une quelconque des revendications 1 à 8.

**Patentansprüche**

1. Verfahren zum Erzeugen eines endgültigen Bildes (Fin1) der Umgebung eines Kraftfahrzeugs (10), wobei das Kraftfahrzeug (10) mit einem Bildsensor (11a, 11b; 12a, 12b) ausgestattet ist, der mit einem Weitwinkelobjektiv versehen ist, wobei das Verfahren die folgenden Schritte umfasst:

- Erfassen eines anfänglichen Bildes (Img0) vom verzerrten Typ durch den Bildsensor (11a, 11b; 12a, 12b), der in einer anfänglichen Stellung in Bezug auf das Kraftfahrzeug (10) positioniert ist;
- Verlagern des Bildsensors (11a, 11b; 12a, 12b) in eine aktualisierte Stellung;
- Erzeugen, ausgehend von dem anfänglichen Bild (Img0), von mindestens zwei anfänglichen Elementarbildern (Imgl, Img2, Img3, Img4, Img5) vom nicht verzerrten Typ, wobei jedes der anfänglichen Elementarbilder (Imgl, Img2, Img3, Img4, Img5) einem Bild entspricht, das von einer virtuellen Kamera erhalten würde, mit der das Kraftfahrzeug (10) ausgestattet ist und deren Brennweite länger als die Brennweite des mit einem Weitwinkelobjektiv versehenen Bildsensors (11a, 11b; 12a, 12b) ist;
- Bestimmen von aktualisierten Elementarbildern (Actl, Act2, Act3, Act4, Act5) durch Anwenden, auf jedes anfängliche Elementarbild (Imgl, Img2, Img3, Img4, Img5), einer Transformation zur Änderung eines Koordinatensystems, die der Änderung der anfänglichen Stellung des Bildsensors (11a, 11b; 12a, 12b) in die aktualisierte Stellung entspricht, und
- Erzeugen des endgültigen Bildes (Fin1) durch Kombinieren der aktualisierten Elementarbilder (Actl, Act2, Act3, Act4, Act5).

2. Verfahren nach Anspruch 1, wobei der Schritt des Erzeugens der anfänglichen Elementarbilder (Imgl, Img2, Img3, Img4, Img5) die folgenden Teilschritte umfasst:

- Speichern einer vorbestimmten Verzerrungskarte, die vorbestimmten Werten eines Einfallswinkels eines auf den Bildsensor (11a, 11b; 12a, 12b) eintreffenden Strahls entsprechende Werte eines Korrekturkoeffizienten (R1) für die Verzerrung zuordnet, und
- Bestimmen der Verzerrungskorrektur für jedes Pixel eines anfänglichen Elementarbildes (Imgl, Img2, Img3, Img4, Img5) auf der Grundlage der vorbestimmten Verzerrungskarte.

3. Verfahren nach Anspruch 2, bei dem der Korrekturkoeffizient (R1) für die Verzerrung in Form eines Polynoms mindestens 6. Grades vorliegt.

4. Verfahren nach einem der Ansprüche 1 bis 3, wobei die Umwandlung zur Änderung eines Koordinatensystems eine Achsenänderung und/oder eine Mittelpunktänderung des Bildsensors (11a, 11b; 12a, 12b) berücksichtigt.

5. Verfahren nach einem der Ansprüche 1 bis 4, umfassend ferner einen Schritt des Verbesserns des endgültigen Bildes (Fin1) durch Reduzieren eines Randbereichs des endgültigen Bildes.

6. Verfahren nach einem der Ansprüche 1 bis 5, umfassend ferner, wenn der Mittelpunkt der aktualisierten Stellung des Bildsensors (11a, 11b; 12a, 12b) von dem Mittelpunkt der anfänglichen Stellung des Bildsensors (11a, 11b; 12a, 12b) entfernt ist und wenn Objekte (34, 35), die in der Umgebung des Kraftfahrzeugs (10) vorhanden sind, in der Nähe des Fahrzeugs (10) gelegen sind, einen Schritt des Bestimmens, auf der Grundlage von Daten, die von einem System (18) zur Fernerkennung durch Licht erfasst werden, mit dem das Kraftfahrzeug (10) ausgestattet ist, der Koordinaten von Punkten einer Punktwolke, die die Formen und Positionen der Objekte (34, 35) charakterisiert, die in der Umgebung des Kraftfahrzeugs (10) in dem Feld des Systems (18) zur Fernerkennung durch Licht vorhanden sind, wobei die aktualisierten Elementarbilder (Actl, Act2, Act3, Act4, Act5) in Abhängigkeit von den Koordinaten der Punkte der Punktwolke bestimmt werden.

7. Verfahren nach Anspruch 6, umfassend ferner die folgenden Schritte:

- Identifizieren jedes Punktes der Punktwolke, die in Bezug auf die Objekte (34, 35), die sich in der Umgebung des Kraftfahrzeugs (10) befinden, bestimmt wird, durch Zuordnen jedes der Punkte der bestimmten Punktwolke zu einem entsprechenden Pixel eines der anfänglichen Elementarbilder (Imgl, Img2, Img3, Img4, Img5),
- Bestimmen eines Texturmerkmals jedes identifizierten Punkts der Punktwolke auf der Grundlage eines Texturmerkmals des entsprechenden Pixels eines der anfänglichen Elementarbilder (Imgl, Img2, Img3, Img4, Img5),
- Rekonstruieren der aktualisierten Elementarbilder (Actl, Act2, Act3, Act4, Act5) ausgehend von jedem Punkt der Punktwolke, der mit dem entsprechenden Texturmerkmal behaftet ist, durch Zuordnen des Punkts zu einem entsprechenden Pixel eines der aktualisierten Elementarbilder (Actl, Act2, Act3, Act4, Act5).

8. Verfahren nach einem der Ansprüche 1 bis 7, wobei die anfänglichen Elementarbilder (Imgl, Img2, Img3, Img4, Img5) virtuell in einer virtuellen Umgebung erzeugt werden, in der das Kraftfahrzeug (10) modelliert ist.

9. Kraftfahrzeug (10), umfassend einen Bildsensor eines Bildsensors, der mit einem Weitwinkelobjektiv versehen ist, und einen Rechner (15), der dazu ausgelegt ist, das Verfahren nach einem der Ansprüche 1 bis 8 durchzuführen.

## Claims

1. Method for generating a final image (Fin1) of the environment of a motor vehicle (10), said motor vehicle (10) being equipped with an image sensor (11a, 11b; 12a, 12b) fitted with a wide-angle lens, said method comprising steps of:

- acquiring an initial image (Img0) of distorted type by means of said image sensor (11a, 11b; 12a, 12b) positioned in an initial posture with respect to the motor vehicle (10);
- moving said image sensor (11a, 11b; 12a, 12b) to an updated posture;
- generating, from said initial image (Img0), at least two initial elementary images (Img1, Img2, Img3, Img4, Img5) of undistorted type, each of the initial elementary images (Img1, Img2, Img3, Img4, Img5) corresponding to an image that would be obtained by a virtual camera installed in the motor vehicle (10) and the focal length of which would be longer than the focal length of the image sensor (11a, 11b; 12a, 12b) fitted with a wide-angle lens;
- determining updated elementary images (Actl, Act2, Act3, Act4, Act5) by applying, to each initial elementary image (Img1, Img2, Img3, Img4, Img5), a change-of-frame transformation corresponding to modification of the initial posture of the image sensor (11a, 11b; 12a, 12b) to the updated posture; and
- generating the final image (Fin1) by combining said updated elementary images (Actl, Act2, Act3, Act4, Act5).

2. Method according to Claim 1, wherein the step of generating said initial elementary images (Img1, Img2, Img3, Img4, Img5) comprises substeps of:

- storing a predetermined distortion map associating with predetermined values of an angle of incidence of a ray incident on the image sensor (11a, 11b; 12a, 12b) corresponding values of a distortion correction coefficient (R1); and

- determining the distortion correction, for each pixel of an initial elementary image (Img1, Img2, Img3, Img4, Img5), based on said predetermined distortion map.

3. Method according to Claim 2, wherein the distortion correction coefficient (R1) takes the form of a polynomial of degree at least equal to 6.

4. Method according to any of Claims 1 to 3, wherein said change-of-frame transformation takes into account a change of axis and/or a change of centre of said image sensor (11a, 11b; 12a, 12b).

5. Method according to any of Claims 1 to 4, further comprising a step of improving the final image (Fin1) by reducing a peripheral portion of said final image.

6. Method according to any of Claims 1 to 5, further comprising, when the centre of the updated posture of said image sensor (11a, 11b; 12a, 12b) is far from the centre of the initial posture of said image sensor (11a, 11b; 12a, 12b) and when objects (34, 35) present in the environment of the motor vehicle (10) are located near said vehicle (10), a step of determining, based on data acquired by a light-based remote-sensing system (18) installed in said motor vehicle (10), coordinates of points of a point cloud characterizing the shapes and positions of the objects (34, 35) present in the environment of the motor vehicle (10), in the field of said light-based remote-sensing system (18), the updated elementary images (Act1, Act2, Act3, Act4, Act5) being determined depending on said coordinates of the points of the point cloud.

7. Method according to Claim 6, further comprising steps of:

- identifying each point of said determined point cloud with respect to the objects (34, 35) present in the environment of the motor vehicle (10) by associating each of the points of said determined point cloud with a corresponding pixel of one of the initial elementary images (Img1, Img2, Img3, Img4, Img5);
- determining a texture characteristic of each identified point of the point cloud based on a texture characteristic of the corresponding pixel of one of the initial elementary images (Img1, Img2, Img3, Img4, Img5);
- reconstructing the updated elementary images (Act1, Act2, Act3, Act4, Act5) from each point of the point cloud assigned the corresponding texture characteristic, by associating said point with a corresponding pixel of one of the updated elementary images (Act1, Act2, Act3, Act4, Act5).

8. Method according to any of Claims 1 to 7, wherein the initial elementary images (Img1, Img2, Img3, Img4, Img5) are generated virtually in a virtual environment in which the motor vehicle (10) is modelled.

9. Motor vehicle (10) comprising an image sensor of an image sensor fitted with a wide-angle lens and a computer (15) configured to implement the method according to any of Claims 1 to 8.

[Fig. 1]

[Fig. 2]

[Fig. 3]

[Fig. 4]

Img1    Img2    Img3

Img5

Img4

[Fig. 5]

A    C1    C2

C5

C4    C3

[Fig. 6]

[Fig. 7]

[Fig. 8]

| θ'[°] | Y'[mm] |
|---|---|
| 0 | 0 |
| 0,1067 | 0,00221868 |
| 0,2134 | 0,00443739 |
| 0,3201 | 0,00665613 |
| 0,4268 | 0,00887494 |
| 0,5335 | 0,0110938 |
| 0,6402 | 0,0133128 |
| 0,7469 | 0,015532 |
| 0,8536 | 0,0177513 |
| 0,9603 | 0,0199707 |
| 1,067 | 0,0221904 |
| 1,1737 | 0,0244102 |
| 1,2804 | 0,0266303 |

[Fig. 9]

| | A | B |
|---|---|---|
| 1 | Angle(rad) | R1 (rad) |
| 2 | 0 | 0,000000000 |
| 3 | 0,00174533 | 0,916732472 |
| 4 | 0,00349066 | 0,916732472 |
| 5 | 0,00523599 | 0,916732472 |
| 6 | 0,00698132 | 0,916732472 |
| 7 | 0,00872665 | 0,928191628 |
| 8 | 0,01047198 | 0,926281769 |
| 9 | 0,0122173 | 0,924917584 |
| 10 | 0,01396263 | 0,923894445 |
| 11 | 0,01570796 | 0,923098670 |
| 12 | 0,01745329 | 0,922462050 |
| 13 | 0,01919862 | 0,921941179 |
| 14 | 0,02094395 | 0,921507121 |
| 15 | 0,02268928 | 0,925547208 |
| 16 | 0,02443461 | 0,924917584 |
| 17 | 0,02617994 | 0,924371909 |
| 18 | 0,02792527 | 0,923894445 |
| 19 | 0,0296706 | 0,923473152 |
| 20 | 0,03141593 | 0,923098670 |
| 21 | 0,03316126 | 0,922763607 |

[Fig. 10]

Act1  Act2  Act3  Act4  Act5

[Fig. 11]

Fin1

[Fig. 12]

35

34

C3

O

Img0

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 101916419 B1
- KR 20090012290 A
- FR 3100914 A1
- FR 3100314